# EUROPÄISCHE PATENTSCHRIFT

(11) **EP 1 031 461 B1**
(45) Veröffentlichungstag und Bekanntmachung des Hinweises auf die Patenterteilung: **11.09.2002**
(21) Anmeldenummer: 99125779.1
(22) Anmeldetag: 23.12.1999
(51) Int. Cl.: B60N 2/64

(54) **Rückenlehne für einen Fahrzeugsitz**
Vehicle seat backrest
Dossier pour sièges de véhicules

(30) Priorität: 23.02.1999 DE 19907670
(43) Veröffentlichungstag der Anmeldung: 30.08.2000
(73) Patentinhaber: EvoBus GmbH, 70567 Stuttgart (DE)
(72) Erfinder: Marx, Alfred, 89129 Oellingen (DE)
(74) Vertreter: Weiss, Klaus

(56) Entgegenhaltungen:
- EP-A- 0 236 146
- WO-A-97/20707
- DE-A- 3 705 542
- DE-A- 19 758 398
- FR-A- 2 698 832
- US-A- 4 776 635
- US-A- 4 969 688

## Beschreibung

Die Erfindung betrifft eine Rückenlehne für einen Fahrzeugsitz, insbesondere für einen Fahrgaststuhl eines Omnibusses, der im Oberbegriff des Patentanspruchs 1 angegebenen Gattung.

Bei einer bekannten Rückenlehne dieser Art (DE 37 05 542 C2) sind an den U-Schenkeln des U-förmigen Rohrrahmens quer zu den Schenkeln verlaufende Stützfedern befestigt, auf denen ein den Rohrrahmen teilweise umgreifendes Polster aus einem Schaumstoff aufliegt. Das Polster ist mit einem Polsterbezug überzogen.

Bei einem bekannten Fahrzeugsitz (FR 2 698 832 A1) besteht das Sitzgestell aus einem Sitzrahmen und einem Lehnenrahmen, die jeweils von einem umlaufenden Rohrstrang gebildet sind. Auf den Sitzrahmen ist ein Sitzteil und auf den Lehnenrahmen ist ein Rückenteil mit einem endseitig angeformten Kopfabstützabschnitt aufgeclipst. Sitz- und Lehnenteil werden jeweils von einer steifen Kunststoffschale gebildet, die mit einem Schaumpolster belegt ist.

Der Erfindung liegt die Aufgabe zugrunde, eine Rückenlehne der eingangs genannten Art zu schaffen, die ausreichend stabil ist, in bestimmten Bereichen eine definierte Elastizität aufweist und bei Einwirkung von dynamischen Kräften Verformungsenergie aufnimmt.

Die Aufgabe ist erfindungsgemäß durch die Merkmale des Patentanspruchs 1 gelöst.

Die erfindungsgemäße Rückenlehne hat den Vorteil, daß sie aus drei unterschiedlichen Bauteilen, nämlich Rohrrahmen, Holzplatte und Kunststoffträger, zusammengesetzt ist und durch den gezielten Einsatz von Materialien und Geometrien dieser Bauteile eine definierte Festigkeit in gewünschten Bereichen und eine definierte Elastizität in anderen Bereichen erreicht wird. Gleichzeitig trägt der Rohrrahmen bei Einwirkung von dynamischen Kräften auf die Rückenlehne, z.B. bei Frontalaufprall des Fahrzeugs, durch plastische Verformung zum Energieabbau bei. Der mit der Holzplatte bestückte Rohrrahmen nimmt im unteren Bereich der Rückenlehne die Belastung der Kniekraft durch Verformung des Rohres aufgrund einer Biegebelastung auf. Im oberen Bereich, in dem der Plattenabschnitt freitragend ist und nicht mehr durch den Rohrrahmen unterstützt ist, wird durch eine elastische Verformung der Holzplatte und des oberen Bereichs des Rohrrahmens die durch den Aufprall des Kopfes erzeugte Kraft definiert absorbiert und somit die auf den Kopf des Fahrzeuginsassens wirkende, Beschleunigungskraft niedrig gehalten. Der Kunststoffträger leistet im Crashfall durch seine elastische Verformung einen zusätzlichen Beitrag zum Abbau der Beschleunigungskräfte im Kopfbereich.

Vorteilhafte Ausführungsformen der erfindungsgemäßen Rückenlehne mit zweckmäßigen Ausgestaltungen und Weiterbildungen der Erfindung ergeben sich aus den weiteren Ansprüchen.

Gemäß einer vorteilhaften Ausführungsform der Erfindung sind die Schenkel des U-förmigen Rohrrahmens an verschiedenen Stellen ihres Längsverlaufs unterschiedlich tief eingesägt.

Durch diese definierten Sägeschnitte wird die Kraftaufnahme des Rohrrahmens durch gezielte elastische Verformung wesentlich verbessert.

Gemäß einer bevorzugten Ausführungsform der Erfindung sind an den freien Enden der Schenkel des U-förmigen Rohrrahmens zwei nach unten wegstrebende, vorzugsweise mit den Schenkeln fluchtende Hebel zur Lehnenanbindung an ein Sitzuntergestell des Fahrzeugsitzes angeschweißt, und die Hebel sind mit mindestens einem das Abschwenken der Lehne nach hinten unterbindenden Anschlag versehen. Der Anschlag sorgt für ausreichende Stabilität des Rohrrahmens gegen eine Verlagerung nach hinten. Die Hebel dienen zudem der Aufnahme des Lehnenverstellmechanismus und der Armlehne.

Gemäß einer vorteilhaften Ausführungsform der Erfindung weist der Kunststoffträger eine gleichmäßig ausgebildete Wabenstruktur auf. Diese Kammerkonstruktion aus gleichartigen Waben leistet in hohem Maße elastische Verformungsarbeit bei Einwirkung von dynamischen Kräften.

Gemäß einer vorteilhaften Ausführungsform der Erfindung sind an dem Kunststoffträger zwei Haltegriffe mit Querabstand voneinander angeordnet bzw. befestigt, wobei die Haltegriffe vorzugsweise in die Lehnenkontur einbezogen sind. Diese ergonomisch in die Rückenlehne integrierten Griffe erleichtern den Fahrzeuginsassen das Platznehmen auf dem dahinter angeordneten Fahrzeugsitz und das Aufstehen von diesem Fahrzeugsitz durch Festhalten an den Griffen.

Die Erfindung ist anhand eines in der Zeichnung dargestellten Ausführungsbeispiels im folgenden näher beschrieben. Es zeigen:
- Fig. 1: einen Längsschnitt einer Rückenlehne eines Fahrgaststuhls für einen Omnibus,
- Fig. 2: eine perspektivische Ansicht eines Rohrrahmens in der Rückenlehne gemäß Fig. 1,
- Fig. 3: eine perspektivische Ansicht einer am Rohrrahmen befestigten Holzplatte,
- Fig. 4: eine perspektivische Ansicht eines zur Befestigung auf der Holzplatte vorgesehenen Kunststoffträgers,
- Fig. 5: ausschnittweise eine Vorderansicht der Rückenlehne in Fig. 1,
- Fig. 6: eine Seitenansicht des Rohrrahmens in Richtung Pfeil VI in Fig. 2.

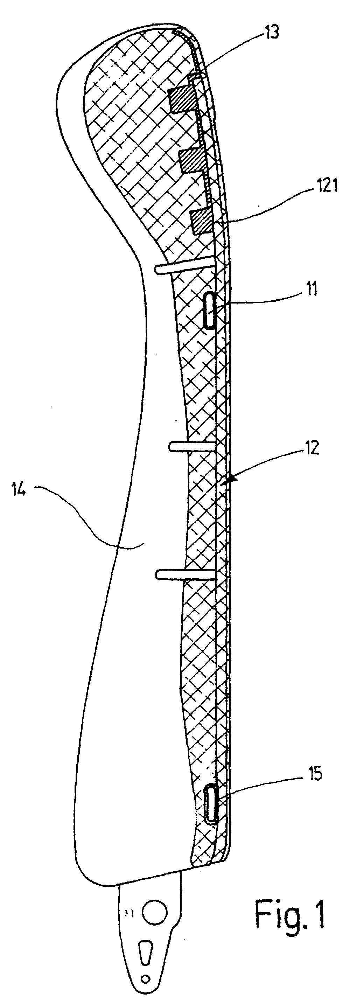

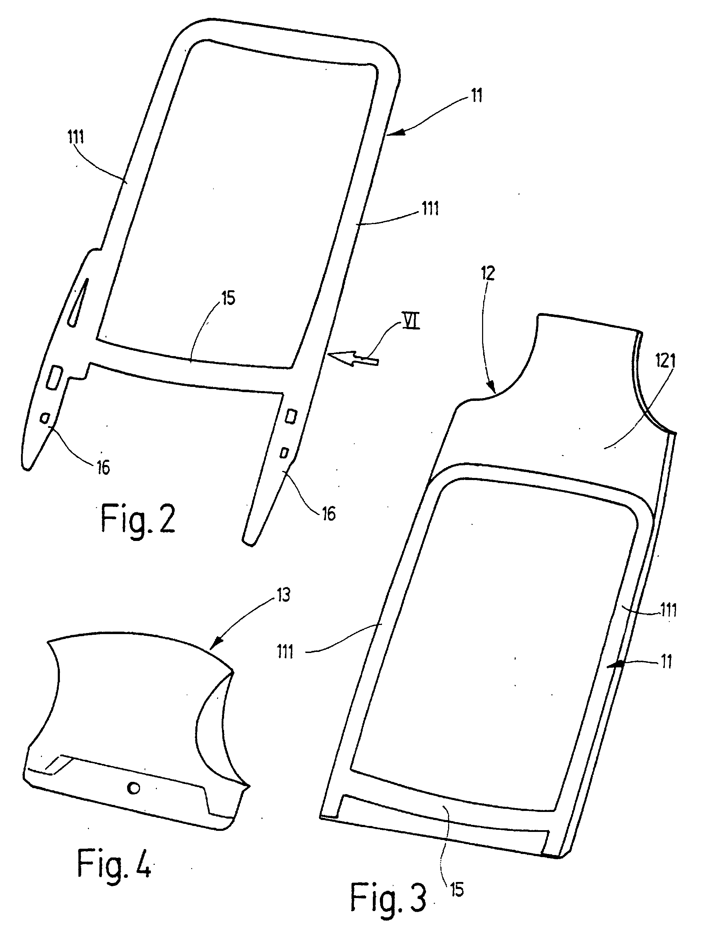

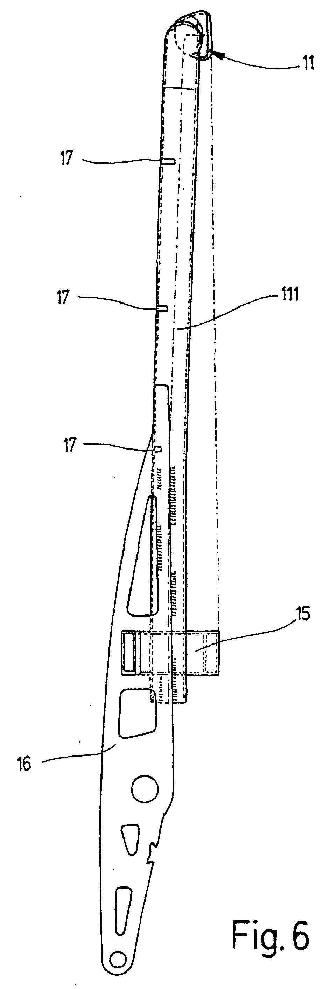

Die in Fig. 1 im Längsschnitt und in Fig. 2 - 4 perspektivisch in ihren Einzelteilen dargestellte Rückenlehne eines Fahrgaststuhls für einen Omnibus als Ausführungsbeispiel für einen allgemeinen Fahrzeugsitz weist einen Rohrrahmen 11, eine mehrlagig verleimte Holzplatte 12, einen elastisch verformbaren Kunststoffträger 13 sowie ein sitzgerecht geformtes Lehnenpolster 14 auf. Der Rohrrahmen 11 ist aus einem Stück U-förmig gebogen, wobei sich die beiden Rahmenschenkel 111 bis zur Lehnenunterkante erstrecken und über eine Querstrebe 15, die nahe den freien Schenkelenden ansetzt, miteinander verbunden sind. An den freien Enden der Rahmenschenkeln 111 setzen zwei nach unten wegstrebende, mit den Rahmenschenkel 111 fluchtende Hebel 16 an, die an den Rahmenschenkeln 111 angeschweißt sind (Fig. 2 und 6). Diese Hebel 16 dienen zur Anbindung der Rückenlehne an das Untergestell des Fahrgaststuhls und zur Aufnahme eines Rückenlehnenverstellmechanismus. Weiterhin dienen die Hebel 16 der Aufnahme der Mittelarmlehnen für den Fahrgaststuhl. Wie hier nicht weiter dargestellt ist, sind die Hebel 16 mit einem das Abschwenken der Rückenlehne nach hinten unterbindenden Anschlag versehen. Wie aus Fig. 6 ersichtlich ist, sind die beiden Rahmenschenkel 111 an verschiedenen Stellen ihres Längsverlaufs von vorn her unterschiedlich tief eingesägt. Durch diese definierten Sägeschnitte 17 wird die Kraftaufnahme des Rohrrahmens 11 durch gezielte elastische Verformung wesentlich verbessert.

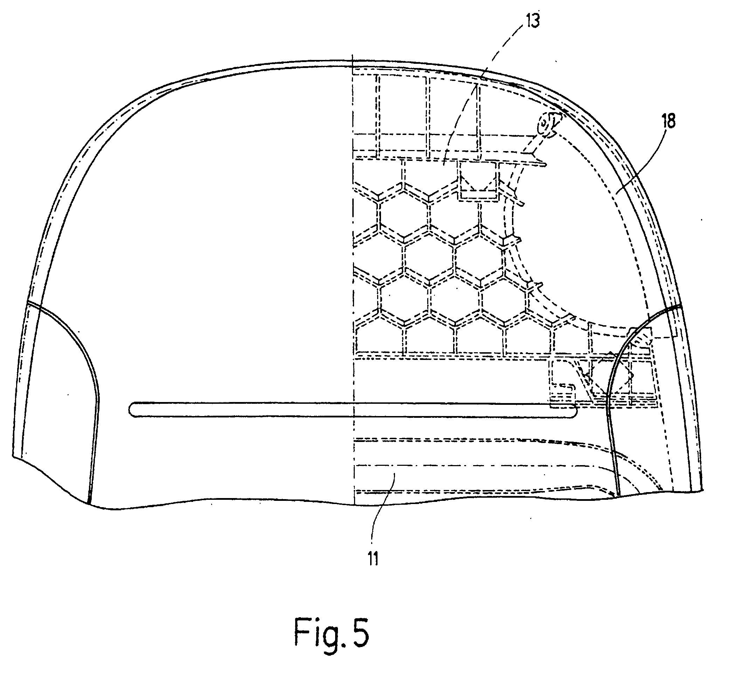

Die in Fig.1 und 3 zu sehende Holzplatte 12 ist an dem Rohrrahmen 11 verschraubt und weist einen nach oben über den Rohrrahmen überstehenden freitragenden Plattenabschnitt 121 auf. Auf diesem mit der Holzplatte 12 einstückigen, freitragenden Plattenabschnitt 121 ist der Kunststoffträger 13 (Fig. 1 und 4) aufgeschraubt. Wie aus Fig. 4 und 5 ersichtlich ist, besitzt der Kunststoffträger 13 eine gleichmäßig ausgebildete Wabenstruktur, die sowohl den Kunststoffträger 13 selbst als auch den darunterliegenden Plattenabschnitt 121 absolut torsionssteif macht und in einem hohen Maße elastische Verformungsarbeit leistet. Wie in Fig. 5 nur für die linke Hälfte der Rückenlehne dargestellt ist, ist links und rechts am äußeren Rand des Kunststoffträgers 13 ein Haltegriff 18 eingeschraubt, der so ausgebildet ist, daß er ergonomisch in die Rückenlehne integriert ist und sich in die Kontur der Rückenlehne einfügt. Diese Griffe 18 erleichtern das Platznehmen und das Aufstehen eines Fahrgastes, der auf einen hinter der Rückenlehne angeordneten Fahrgaststuhl sitzt. Die durch die Wabenstruktur gegebene Torsionssteifheit des Kunststoffträgers 13 und des mit diesem verbundenen Plattenabschnitts 121 gewährleistet, daß keine Verwindung der gesamten Rückenlehne bei einseitiger Belastung an einem Haltegriff 18 auftritt.

## Patentansprüche

1. Rückenlehne für einen Fahrzeugsitz, insbesondere für einen Fahrgaststuhl eines Omnibusses, mit einem aus einem Stück gebogenen U-förmigen Rohrrahmen (11), dessen beide Rahmenschenkel (111) sich bis zur Lehnenunterkante erstrecken und über eine nahe den freien Schenkelenden ansetzende Querstrebe (15) miteinander fest verbunden sind,
**dadurch gekennzeichnet,**
**daß** auf dem Rohrrahmen (11) eine vorzugsweise mehrlagig verleimte Holzplatte (12) befestigt ist, die mit einem einstückigen, freitragenden Plattenabschnitt (121) nach oben über den Rohrrahmen (11) übersteht, und daß auf dem freitragenden Plattenabschnitt (121) ein der Kopfabstützung dienender, elastisch verformbarer Kunststoffträger (13) befestigt ist.

2. Rückenlehne nach Anspruch 1,
**dadurch gekennzeichnet,**
**daß** die Rahmenschenkel (111) des Rohrrahmens (11) an verschiedenen Stellen ihres Längsverlaufs unterschiedlich tief eingesägt sind.

3. Rückenlehne nach Anspruch 1 oder 2,
**dadurch gekennzeichnet,**
**daß** an den freien Enden der Rahmenschenkel (111) des Rahmens (11) zwei nach unten wegstrebende, vorzugsweise mit den Rahmenschenkeln (111) fluchtende Hebel (16) zur Lehnenanbindung an ein Sitzuntergestell des Fahrzeugsitzes angeschweißt sind.

4. Rückenlehne nach Anspruch 3,
**dadurch gekennzeichnet,**
**daß** die Hebel (16) mit mindestens einem das Abschwenken der Lehne nach hinten unterbindenden Anschlag versehen sind.

5. Rückenlehne nach einem der Ansprüche 1 - 4,
**dadurch gekennzeichnet,**
**daß** der Kunststoffträger (13) eine gleichmäßig ausgebildete Wabenstruktur aufweist.

6. Rückenlehne nach Anspruch 5,
**dadurch gekennzeichnet,**
**daß** an dem Kunststoffträger (13) zwei Haltegriffe (18) mit Querabstand voneinander befestigt sind.

7. Rückenlehne nach Anspruch 6,
**dadurch gekennzeichnet,**
**daß** die Haltegriffe (18) in die Lehnenkontur einbezogen sind.

## Claims

1. Back rest for a vehicle seat, in particular for a passenger seat for a bus, with a U-shaped tubular frame (11) bent from one piece, the frame legs (111) of which extend to the lower edge of the back rest and are permanently linked to each other by a cross-brace (15) located near the free leg ends,
**characterised in that**
a wooden panel (12), preferably bonded in several layers, projecting upwards beyond the tubular frame (11) with a single-piece, cantilevered panel section (121) is mounted on the tubular frame (11), and **in that** a flexible plastic support element (13) designed for use as a head rest is mounted on the cantilevered panel section (121).

2. Back rest according to claim 1,
**characterised in that**
the frame legs (111) of the tubular frame (11) are cut to varying depths at various points along their length.

3. Back rest according to claim 1 or 2,
**characterised in that**
two levers (16) projecting downwards and preferably flush with the frame legs (111) are welded to the free ends of the frame legs (111) of the frame (11) to tie the back rest to a seat base of the vehicle seat.

4. Back rest according to claim 3,
**characterised in that**
the levers (16) are fitted with at least one stop preventing the backward swivelling movement of the back rest.

5. Back rest according to any of claims 1 to 4,
**characterised in that**
the plastic support element (13) has a regular honeycomb structure.

6. Back rest according to claim 5,
**characterised in that**
two handles (18) are mounted on the plastic support element (13) at a lateral distance from each other.

7. Back rest according to claim 6,
**characterised in that**
the handles (18) are integrated into the contour of the back rest.

## Revendications

1. Dossier pour un siège de véhicule, notamment pour un siège de passager d'un autobus, comportant un cadre tubulaire en forme de U (11), formé par coudage en un seul élément et dont les deux branches (111) s'étendent jusqu'au bord inférieur du dossier et sont reliées de façon fixe l'une à l'autre au moyen d'une traverse (15) montée à proximité des deux extrémités libres des branches, **caractérisé en ce que** sur le cadre tubulaire (11) est fixé une plaque en bois (12), qui est de préférence formé par plusieurs couches collées entre elles et qui fait saillie vers le haut, au-dessus du cadre tubuiaire (11), par un élément de plaque en porte-à-faux d'un seul tenant (121) et que sur la partie de plaque en porte-à-faux (121) est fixé un support en maLière plastique (13) qui sert d'appuie-tête et est déformable élastiquement.

2. Dossier selon la revendication 1, **caractérisé en ce que** les branches (111) du cadre tubulaire (11) sont entaillées sur des profondeurs différentes en différents emplacements sur leur étendue en longueur.

3. Dossier selon la revendication 1 ou 2, **caractérisé en ce que** sur les extrémités libres des branches (111) du cadre (11) sont soudés deux leviers (16), qui s'étendent vers le bas, sont alignés de préférence avec les branches (111) et servent à fixer le dossier à un châssis inférieur du siège du véhicule.

4. Dossier selon la revendication 3, **caractérisé en ce que** les leviers (16) comportent au moins une butée qui empêche le pivotement du dossier vers l'arrière.

5. Dossier selon l'une des revendications 1 à 4, **caractérisé en ce que** le support en matière plastique (13) possède une structure en nid d'abeilles agencée de façon uniforme.

6. Dossier selon la revendication 5, **caractérisé en ce que** deux griffes de retenue (18), situées transversalement à distance l'une de l'autre, sont fixées au support en matière plastique (13).

7. Dossier selon la revendication 6, **caractérisé en ce que** les griffes de retenue (18) sont insérées dans le contour du dossier.
